Europäisches Patentamt

European Patent Office

Office européen des brevets

(11) Veröffentlichungsnummer: **0 309 703 B1**

## EUROPÄISCHE PATENTSCHRIFT

(45) Veröffentlichungstag der Patentschrift: **29.01.92**

(51) Int. Cl.⁵: **B64F  1/22**

(21) Anmeldenummer: **88113042.1**

(22) Anmeldetag: **11.08.88**

(54) Schleppfahrzeug für Flugzeuge-Lenkergesteuerte Hubschaufel.

(30) Priorität: **28.09.87 DE 3732664**

(43) Veröffentlichungstag der Anmeldung:
**05.04.89 Patentblatt  89/14**

(45) Bekanntmachung des Hinweises auf die
Patenterteilung:
**29.01.92 Patentblatt  92/05**

(84) Benannte Vertragsstaaten:
**AT BE CH ES FR GB IT LI NL SE**

(56) Entgegenhaltungen:
**WO-A-87/06910
DE-A- 3 327 628
DE-A- 3 534 045
FR-A- 2 454 409**

(73) Patentinhaber: **Krauss-Maffei Aktiengesellschaft
Krauss-Maffei-Strasse 2
W-8000 München 50(DE)**

(72) Erfinder: **Pollner, Jürgen, Dipl.-Ing.
Fritz-Reuter-Strasse 36
W-8000 München 60(DE)**
Erfinder: **Trummer, Gregor, Dipl.-Ing.
Alpenblick 5
W-8134 Aschering(DE)**
Erfinder: **Mölzer, Peter, Dipl.-Ing.
Geranienweg 7
W-8061 Schwabhausen(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Schleppfahrzeug für Flugzeuge von der im Oberbegriff des Anspruchs 1 angegebenen Art.

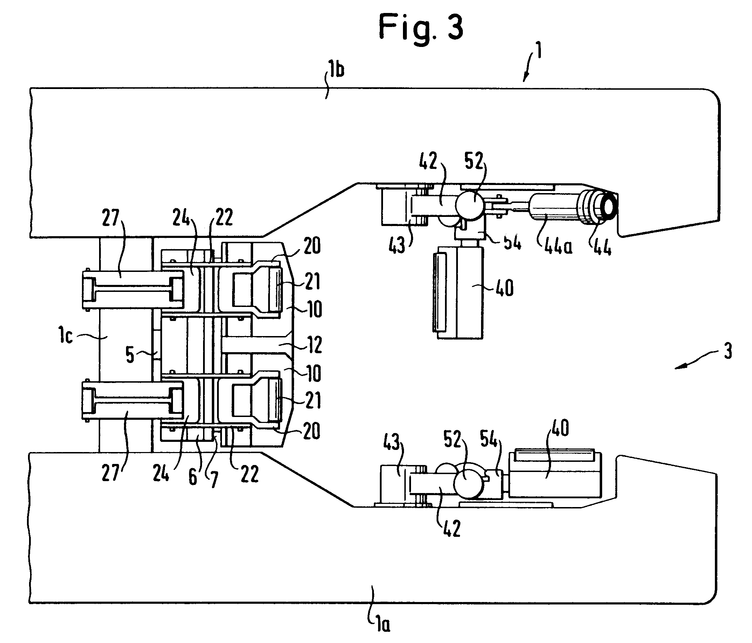

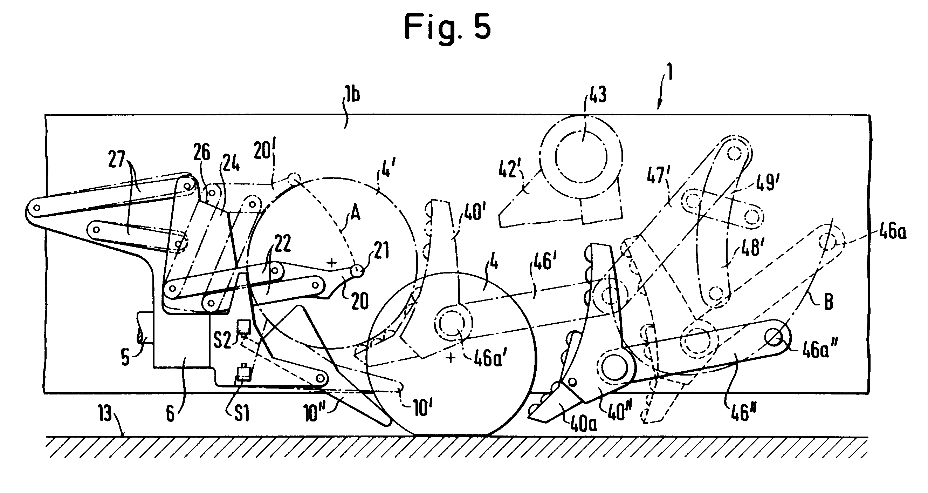

Bei einem vorbenutzten Prototyp des erfindungsgemäßen Schleppfahrzeuges, über den u.a. in den Medien berichtet wurde, ist die Hubschaufel an dem vorwärtsschwenkbaren Hubschaufelträger frei kippbar gelagert, so daß sie sich beim Heranbewegen an das Bugrad frei an dessen Kontur anlegen kann. Bei Bugrädern sehr unterschiedlicher Durchmesser ist eine solche Anpassung an die Bugradkontur aber nur unvollkommen und jeweils nur über einen relativ kleinen Winkelbereich des Bugradumfangs möglich. Entsprechendes gilt von in DE-OS 35 34 045 beschriebenen, nicht zur Ausführung gelangten Ausführungsformen von Schleppfahrzeugen, bei denen die Hubschaufel gemäß Fig. 5 ebenfalls frei kippbar an einem Vorschubhebel gelagert ist, während gemäß Fig. 3 die Hubschaufel als ebene Rollenbrücke ausgebildet ist, die nur Punktberührung mit dem Bugrad hat.

Idealerweise sollte die Hubschaufel während des Aufnahmevorganges an dem Bugrad an einem möglichst tief gelegenen Angriffspunkt angreifen, um die Anstellkraft möglichst wirksam in Hubkraft umzusetzen, sollte aber am fertigaufgenommenen Bugrad möglichst hochreichend anliegen, um zusammen mit dem Niederhalter eine wirksame Sicherung gegen Ausweichen des Bugrades nach oben zu gewährleisten. Diese Forderungen sind mit den bekannten Hubschaufeln, insbesondere bei Bugrädern sehr unterschiedlichen Durchmessers, nicht zu erfüllen.

Der Erfindung liegt die Aufgabe zugrunde, ein Schleppfahrzeug der genannten Art so weiterzubilden, daß mit der Hubschaufel auch Bugräder sehr unterschiedlichen Durchmessers mit einem sehr tiefreichenden Angriffsbereich der Hubschaufel am Bugradumfang aufgenommen und mit einem sehr hochreichenden Angriffsbereich der Hubschaufel am Bugrad eingespannt werden können.

Die erfindungsgemäße Lösung der Aufgabe ist im Anspruch 1 angegeben. Durch die erfindungsgemäße Zwangssteuerung des Kippwinkels der Hubschaufel während des Aufnahmevorganges wird erreicht, daß die Hubschaufel das Bugrad mit ihrer relativ flach gestellten und tief am Bugrad angreifenden unteren Kante erfaßt, im Verlauf des Aufnahmevorgangs in eine zunehmend steilere Lage gekippt wird und sich dadurch auch mit ihrem oberen Teil zunehmend an das Bugrad anlegt und dieses einspannen kann. Dieses Kippen der Hubschaufel in die Steillage ist besonders im Endbereich des möglichen Vorschubweges der Hubschaufel ausgeprägt, wirkt sich somit besonders beim Einspannen von Hubrädern kleineren Durchmessers aus.

Weitere vorteilhafte Ausgestaltungen der Erfindung sind in den Unteransprüchen angegeben. Insbesondere ist durch die Merkmale des Anspruchs 4 gewährleistet, daß der Angriffsbereich der Hubschaufel am Bugradumfang bis zu einem höher als die Bugradachse gelegenen Punkt reicht.

Ausführungsformen der Erfindung werden anhand der Zeichnungen näher erläutert. Es zeigt:

Fig. 1 eine schematische Darstellung des Schleppfahrzeuges beim Schleppen eines Flugzeuges;

Fig. 2 eine schematische Seitenansicht der Hub- und Einspannvorrichtung;

Fig. 3 die Hub- und Einspannvorrichtung in der Draufsicht;

Fig. 4 eine Hubschaufel mit den zugehörigen Lagerungs- und Antriebseinrichtungen in perspektivischer Darstellung;

Fig. 5 schematisch die Hub- und Einspannvorrichtung in verschiedenen Stellungen beim Aufnehmen eines Bugrades;

Fig. 6 in ähnlicher Darstellung wie Fig. 5 das Aufnehmen eines Bugrades mit größerem Durchmesser;

Fig. 7 eine graphische Darstellung des zeitlichen Verlaufes des Druckes im Hubzylinder der Hubschaufel während eines Aufnahmevorganges;

Fig. 8 ein vereinfachtes hydraulisches und elektrisches Schaltschema der Hub- und Einspannvorrichtung.

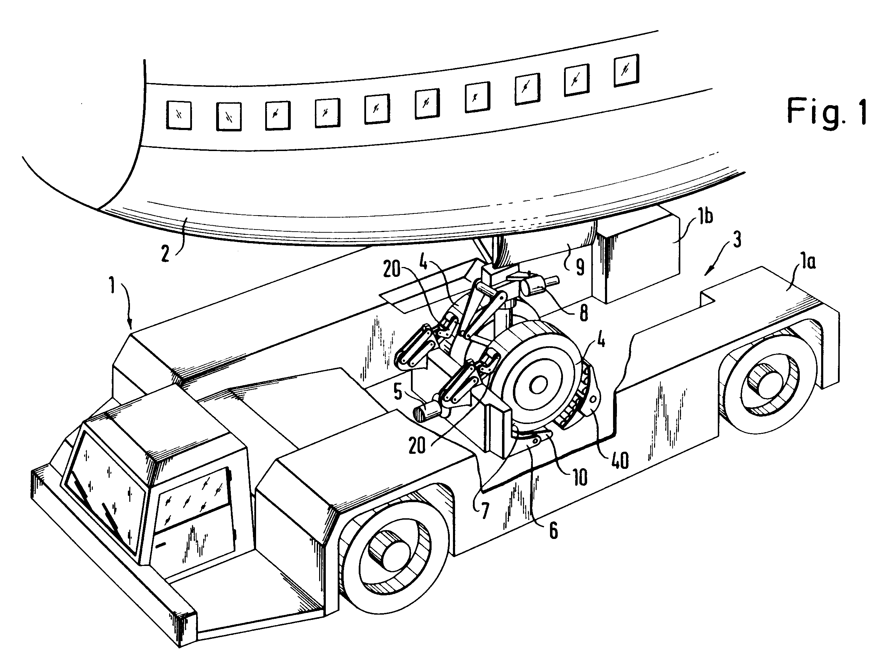

Fig. 1 zeigt schematisch ein Schleppfahrzeug 1 beim Schleppen eines Verkehrsflugzeuges 2. Das Schleppfahrzeug 1 hat ein gabelförmiges Fahrgestell mit zwei Seitenschenkeln 1a, 1b, die zwischen sich eine nach hinten offene Fahrgestellausnehmung 3 begrenzen. Das Schleppfahrzeug wird rückwärts derart gegen das zu schleppende Flugzeug manövriert, daß das Bugfahrwerk des Flugzeuges in die Ausnehmung 3 eintritt. Anschließend werden die Bugräder 4 des Flugzeuges von einer Hub- und Einspannvorrichtung ergriffen, angehoben und am Schleppfahrzeug 1 kraftschlüssig eingespannt. Die Hub- und Einspannvorrichtung, die in Fig. 1 nur vereinfacht dargestellt und durch teilweises Wegbrechen des Seitenschenkels 1a sichtbar gemacht ist, besteht aus den folgenden Hauptteilen:

- Ein am Fahrzeug um eine in dessen Längsrichtung verlaufende Achse 5 schwenkbar gelagertes Widerlager oder Wippbock 6, der eine nach hinten gerichtete, etwa lotrechte Anschlagfläche 7 für die Bugräder 4 aufweist;

- eine am Wippbock 6 um eine horizontale Achse kippbar gelagerte Auffahrrampe 10, welche die Bugräder 4 von unten abstützt;

- zwei am Wippbock 6 beweglich gelagerte Niederhalter 20, von denen jeder von vorne-oben her gegen ein Bugrad 4 anliegt und mittels einer hydraulischen Spannvorrichtung gegen das Bugrad angedrückt werden kann;

- je eine hinter ein Bugrad 4 einschwenkbare und dann nach vorne gegen das Bugrad 4 bewegbare Hubschaufel 40, durch die das Bugrad 4 auf die Auffahrrampe 10 aufgeschoben und mit einer definierten Einspannkraft gegen die Anschlagfläche 7 gedrückt werden kann.

Diese in Fig. 1 nur schematisch unter Weglassung zahlreicher Details dargestellten Einrichtungen werden im folgenden im einzelnen erläutert.

Aus Fig. 1 ist auch ersichtlich, daß sich unmittelbar über der Oberkante der Bugräder 4 weitere zum Bugfahrwerk gehörende Einrichtungen wie z.B. die hydraulischen Lenkzylinder 8 sowie die Bodenklappe 9 des Bugfahrwerkschachtes befinden können. Es ist eine unabdingbare Forderung, daß die Hub- und Einspannvorrichtung so ausgebildet sein muß, daß auch im Falle einer Fehlfunktion oder Fehlbedienung jegliche Beschädigung dieser zum Flugzeug gehörenden Teile ausgeschlossen sein muß.

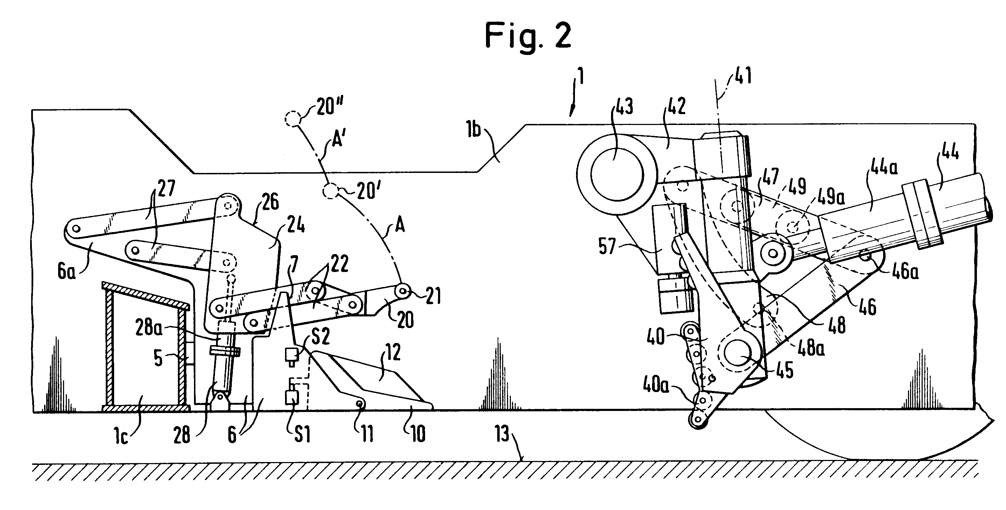

Fig. 2 zeigt in der Seitenansicht die den rechten Seitenschenkel 1b des Fahrzeugs zugeordnete Hälfte der Hubeinrichtung. Fig. 3 zeigt eine Draufsicht auf die gesamte Hub- und Einspanneinrichtung.

Der Wippbock 6 mit der Anschlagfläche 7 ist mittels der Schwenkachse 5 an einem Querträger 1c des Fahrzeugs um dessen Längsachse schwenkbar gelagert. Am hinteren Ende des Wippbocks 6 ist die Auffahrrampe 10 um die waagrechte Achse 11 kippbar gelagert. Die Auffahrrampe 10 ist schaufelförmig mit einem nach oben konkaven oder gewinkelten Profil, so daß ihr vorderer (in Fig. 2 links von der Achse 11 liegende) Teil steiler geneigt ist als der hintere Teil, und sie kann in ihrer Mitte eine Zentrierrippe 12 tragen, die zwischen die beiden Bugräder 4 des Bugfahrwerks greift, um dieses bezüglich der Fahrzeugmitte zu zentrieren. Fig. 2 zeigt die Auffahrrampe 10 in ihrer Ruhestellung, in der ihre untere Fläche etwa parallel zur Fahrbahn 13 verläuft und die Auffahrrampe 10 nicht nach unten über die Bodenfläche des Schleppfahrzeugs vorsteht, also dessen Bodenfreiheit nicht beeinträchtigt. Aus dieser Normalstellung kann die Auffahrrampe 10 in Fig. 2 im Uhrzeigersinn nach unten gekippt werden, bis sie eine Aufnahmestellung erreicht, in der ihre hintere Kante nur in geringem Abstand von der Fahrbahn 13 steht, um die Bugräder aufzunehmen. Beim Aufnehmen der Bugräder kippt die Auffahrrampe 10 dann in Fig. 2 entgegen dem Uhrzeigersinn zurück in die dargestellte Ruhestellung und darüber hinaus in eine Abstützstellung, in der sie das aufgenommene Bugfahrwerk abstützt.

Jeder Niederhalter 20 trägt an seinem Ende eine Rolle 21 und ist beidseitig mittels je zweier Parallellenker 22 an einem Niederhalterträger 24 gelagert, der seinerseits mittels zweier Lenker 27 an einer nach vorne vorspringenden Konsole 6a des Wippbocks 6 gelagert ist. Am Niederhalterträger 24 greift ein am Fahrgestell schwenkbar gelagerter hydraulischer Niederhaltezylinder 28 an, um eine nach unten gerichtete Niederhaltekraft auszuüben. Der Niederhalterträger 24 weist in seinem oberen Teil eine Anlagefläche 26 auf, die den Schwenkweg des an den Lenkern 22 geführten Niederhalters 20 begrenzt. Die Anordnung ist derart getroffen, daß der Niederhalter 20 aus der in Fig. 2 dargestellten hintersten Stellung, einem aufzunehmenden Bugrad folgend, unter Führung durch die Parallellenker 22 zunächst auf einer ersten bogenförmigen Bahn A in die Stellung 20' schwenken kann, die der Anlage an der Anlagefläche 26 des Niederhalterträgers 24 entspricht, und anschließend gemeinsam mit dem Niederhalterträger 24 unter Führung durch die Lenker 27 in die bei 20″ angedeutete obere Extremstellung auf einer zweiten bogenförmigen Bahn A' bewegt wird. Dabei sind die Abmessungen und die Lenkergeometrie auf die Größen der Bugräder der üblichen größeren Verkehrsflugzeuge abgestimmt. Unter den heute üblichen größeren Verkehrsflugzeugen hat der Flugzeugtyp Boeing 757 den kleinsten Bugraddurchmesser mit 31 Zoll (79 cm) und der Flugzeugtyp 747 den größten Bugraddurchmesser von 49 Zoll (124 cm), während die Bugraddurchmesser anderer üblicher Verkehrsflugzeuge wie Boeing 767, DC 8 und DC 10 und Airbus A 300 und A 310 zwischen diesen Extremen liegen. In der untersten Stellung gemäß Fig. 2 befindet sich die Rolle 21 in einem Abstand von der Fahrbahn 13, der kleiner als der kleinste Bugraddurchmesser und größer als die Hälfte des größten Bugraddurchmessers der genannten Typen ist, also zwischen 62 ung 79 cm liegt. Auch ragt der Niederhalter in dieser Stellung soweit nach hinten, daß er sich etwa oberhalb der Aufnahmekante der Auffahrrampe 10, jedenfalls aber hinter deren Kippachse 11 befindet.

Auf diese Weise wird erreicht, daß der Niederhalter 20 an einem aufzunehmenden Bugrad, unabhängig von dessen Durchmesser, bereits bei Beginn des Aufnahmevorgangs im vorderen oberen Quadranten des Umfangs zur Anlage kommt, und dann vom Bugrad bei dessen Auffahren auf die Rampe 10 nach oben mitgenommen wird, wobei er sich zu keinem Zeitpunkt vor oder während des Aufnahmevorgangs in einer Position höher als die Oberkante eines Bugrades befinden kann, wo er zum Bugfahrwerk gehörende Einrichtungen wie Lenkzylinder, Bodenklappen od.dgl. beschädigen könnte.

Dem Komplex aus Anschlagfläche 7, Auffahrrampe 10 und Niederhaltern 20 gegenüber liegen die Hubschaufeln 40. Diese sind jeweils als Rollenbock ausgebildet, mit einem oberen starren und einem unteren beweglichen Teil, wie noch erläutert wird. Jede Hubschaufel 40 ist um eine etwa vertikale Achse 41 schwenkbar an einer Schwinge 42 gelagert, die in einem horizontalachsigen Schwenklager 43 am entsprechenden Seitenschenkel, z.B. 1b des Fahrzeugs gelagert ist und mittels eines Hubzylinders 44 aus der in Fig. 2 gezeigten hinteren Stellung nach vorne in Richtung gegen die Auffahrrampe 10 und das Widerlager 7 bewegt werden kann, um ein Bugrad auf die Auffahrrampe 10 aufzuschieben. Jede Hubschaufel 40 ist außerdem an der Schwinge 42 um eine Achse 45 kippbar gelagert, und während der Hubzylinder 44 die Schwinge 42 mit der Hubschaufel 40 nach vorne bewegt, wird die Kippneigung der Hubschaufel 40 mittels eines Lenkergestänges gesteuert, welches aus einem Steuerarm 46, einem Koppellenker 47 und zwei Lenkern 48, 49 besteht, deren oberes Ende jeweils am Koppellenker 47 verbunden und deren unteres Ende in Lagern 48a, 49a am Seitenschenkel 1b des Fahrzeugs gelagert ist. Durch die ein Vierpunkt-Lenkergetriebe bildenden Lenker 47, 48, 49 wird der hintere Gelenkpunkt 46a des Steuerarms 46 bei der Vorwärtsbewegung der Hubschaufel 40 auf einer bogenförmigen, zunächst nach unten gerichteten und dann wieder ansteigenden Bahn B geführt, die insbesondere in ihrem vorderen ansteigenden Abschnitt steiler als ein Kreisbogen verläuft.

Mittels eines an der Schwinge 42 befestigten hydraulischen Drehmotors 57 kann die Hubschaufel 40 um die Achse 41 in einer an der Seitenwand des Seitenschenkels 1b des Fahrgestells anliegende Ruhestellung geschwenkt werden, wie dies in Fig. 3 für die Hubschaufel 40 des in Fahrtrichtung linken Seitenschenkels 1a dargestellt ist. Beim Heranfahren an ein Bugfahrwerk müssen selbstverständlich beide Hubschaufeln in die Ruhestellung geschwenkt sein, damit das Bugfahrwerk in die Ausnehmung 3 des Fahrgestells eintreten kann. Anschließend werden die Hubschaufeln hinter die Bugräder in die Arbeitsstellung eingeschwenkt, um die Bugräder zu hintergreifen.

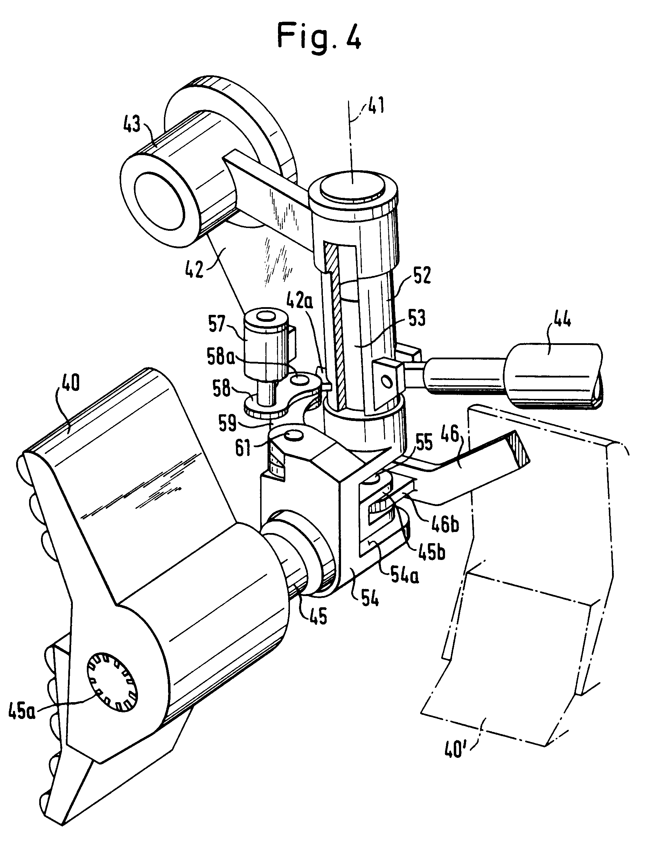

Die Lagerung und die Antriebe für die Hubschaufeln 40 sind in der Fig. 4 im Detail dargestellt. Die am Fahrzeug im Schwenklager 43 um eine horizontale Achse schwenkbare Schwinge 42 trägt eine Lagerhülse 52, in welcher um die Achse 41 drehbar ein Wellenzapfen 53 eines Hubschaufelträgers 54 gelagert ist. Der Hubschaufelträger 54 bildet seinerseits ein horizontalachsiges Lager für die Lagerung einer Welle 45, auf der die Hubschaufel 40 mittels einer Verzahnung 45a drehfest angeordnet ist. Das von dem Hubschaufelträger 54 gebildete Lager für die Welle 45 ist nur in dem der Hubschaufel 40 zugewendeten Bereich auf 360° geschlossen und weist daran anschließend einen nach hinten offenen Ausschnitt 54a auf, durch den man in Fig. 4 das gabelförmig ausgebildete Ende 45b der Welle 45 sieht. In diese greift ein an dem Steuerarm 46 angeformtes Lagerauge 46b ein, welches mit der Welle 45 durch einen Gelenkbolzen 55 gelenkig verbunden ist, wobei die Gelenkachse koaxial zur Schwenkachse 41 verläuft. Auf diese Weise ist der Steuerarm 46 mit der Welle 45 bezüglich deren Achse drehfest verbunden und kann deren Drehung relativ zu dem Hubschaufelträger 54 steuern, wenn der Hubzylinder 44 die Schwinge 42 und damit die Hubschaufel 40 um die Achse des Schwenklagers 43 nach vorne schwenkt.

Andererseits ermöglicht die Gelenkverbindung des Steuerarms 46 mit der Welle 45, daß der Hubschaufelträger 54 mit der Hubschaufel 40 um die Achse 41 der Lagerhülse 52 geschwenkt werden kann, so daß die Hubschaufel 40 ihre bei 40' strichpunktiert angedeutete Ruhestellung einnehmen kann. Diese Schwenkung wird durch den hydraulischen Drehmotor 57 bewirkt, der an der Schwinge 42 befestigt ist und einen Kurbelarm 58 antreibt, der an seinem freien Ende über ein Gelenk 58a mit einem Koppellenker 59 verbunden ist, der seinerseits in einem Gelenklager 61 des Hubschaufelträgers 54 gelagert ist. In der in Fig. 4 dargestellten Arbeitsstellung der Hubschaufel 40 liegt der Kurbelarm 58 an einem festen Anschlag 42a der Schwinge 42 an, welcher eine weitere Drehung des Kurbelarms 58 im Uhrzeigersinn in Fig. 4 verhindert. Da in dieser Stellung die Längsachse des Koppellenkers 59 zwischen den Gelenken 58a und 61 auf der in Fig. 4 rechten Seite der Achse des Drehmotors 57 liegt, erzeugen die beim Aufnehmen und Einspannen eines Bugrades auf die Hubschaufel 40 wirkenden, nach hinten gerichteten Reaktionskräfte am Kurbelarm 58 ein im Uhrzeigersinn von Fig. 4 gerichtetes Drehmoment, welches vom Anschlag 42a aufgenommen wird. Die Hubschaufel 40 ist somit in ihrer Arbeitsstellung mechanisch verriegelt. Um die Hubschaufel 40 in ihre Ruhestellung zu bewegen, muß der hydraulische Drehmotor 57 so beaufschlagt werden, daß er den Kurbelarm 58 im Gegenuhrzeigersinn von Fig. 4 dreht, wobei dieser sich vom Anschlag 42a wegbewegt und die Längsachse des Koppellenkers 59 über den Totpunkt unter der Achse des Drehmotors 57 hindurch wandert. Bei der dargestellten Geometrie ist für die Schwenkung des Hubschaufelträgers 54 um 90° um die Achse 41, um die Hubschaufel 40 in die Ruhestellung zu bringen, ein Schwenkweg des Kurbelarms 58 von mehr als 180° erforderlich, wobei am Ende dieser Schwenkbewegung das Gelenk 58a am freien Ende des Kurbelarms ungefähr in der Position ist, in der sich in Fig. 4 das Gelenklager 61 des Hubschaufelträgers 54 befindet.

Da die Schwenkachse 41 nicht exakt lotrecht, sondern etwas nach vorne geneigt ist, wird die Hubschaufel bei der Schwenkung in die Ruhelage etwas angehoben, so daß sie mit ihrer Unterkante die Bodenfreiheit des Schleppfahrzeugs nicht beeinträchtigt. In der Arbeitsstellung vor und während dem Aufnahmevorgang ist es dagegen unschädlich, wenn die Hubschaufel nach unten über die Fahrzeugunterkante vorsteht.

Fig. 5 veranschaulicht schematisch verschiedene Stellungen der Hub- und Einspannvorrichtung beim Aufnehmen eines Bugrades. Die dargestellten Größenverhältnisse beziehen sich auf ein Bugrad, dessen Durchmesser an der unteren Grenze des Bereichs der Bugraddurchmesser der üblichen Verkehrsflugzeuge liegt, für die das Schleppfahrzeug ausgelegt ist. Wie bereits erwähnt erstreckt sich dieser Bereich von ca. 30 Zoll (75 cm) bis ca. 50 Zoll (ca. 125 cm) und erfaßt somit an seiner unteren Grenze Flugzeuge vom Typ Boeing 757 (Bugraddurchmesser 31 Zoll) und an seiner oberen Grenze Flugzeuge vom Typ Boeing 747 (Bugraddurchmesser 49 Zoll). Die Hub- und Einspannvorrichtung muß so ausgelegt sein, daß alle in diesem Durchmesserbereich liegenden Bugräder einwandfrei und ohne Gefahr von Beschädigungen aufgenommen und im aufgenommenen Zustand so sicher eingespannt sind, daß sie unter keinen Umständen ungewollt freikommen können.

Zu Beginn eines Aufnahmevorgangs sind die Hubschaufeln 40 in die Ruhestellung geschwenkt und das Schleppfahrzeug wird rückwärts derart an das Flugzeug herangefahren, daß das Bugrad in die U-Ausnehmung des Fahrgestells eintritt und schließlich von der hinteren Kante der Auffahrrampe 10 berührt wird. Hierdurch wird die Auffahrrampe 10 nach unten in die Stellung 10″ gekippt, die in Fig. 5 in Vollinien dargestellt ist. Hierdurch wird der Endschalter S2 betätigt, dessen Schaltsignal den Antrieb des Schleppfahrzeugs zumindest für Rückwärtsfahrt unwirksam macht, so daß das Schleppfahrzeug nicht weiter gegen das Bugrad 4 heranfahren und dieses eventuell beschädigen könnte. Ferner aktiviert das Schaltsignal S2 die Antriebseinrichtungen 57, 44 für die Hubschaufel 40, so daß der Fahrer des Schleppfahrzeugs mittels eines Bedienungshebels diese Antriebe einschalten kann. Solange der Endschalter S2 noch nicht betätigt wurde, um das ordnungsgemäße Anstehen eines Bugrades 4 an der Auffahrrampe 10 anzuzeigen, sind die Hubschaufelantriebe deaktiviert, um Fehlbedienungen auszuschließen. Bei Einschalten der Hubschaufelantriebe werden zuerst mittels des hydraulischen Drehmotors 57 die jeweilige Hubschaufel aus der Ruhestellung in die Arbeitsstellung geschwenkt und anschließend wird der Hubzylinder 44 mit Hydraulikmedium beaufschlagt um seine Kolbenstange auszuschieben. Hierdurch gelangen die Hubschaufel 40 und der mit ihr winkelsteif verbundene Steuerarm 46 aus der in Fig. 5 gestrichelt dargestellten Ausgangslage zunächst in die mit Vollinien dargestellte Zwischenlage 40″, 46″, in der die Rollen der Hubschaufeln 40 das Bugrad 4 berühren, wobei sich der kippbar gelagerte untere Rollenbock 40a der Hubschaufel 40 an den Umfang des Bugrades 4 anlegen kann. Durch weiteres Ausfahren der Kolbenstange des Hubzylinders 44 schiebt die Hubschaufel 40 das Bugrad 4 auf die Auffahrrampe 10. Hierbei legt sich der Niederhalter 20 an den Umfang des Bugrades 4 an und wird von diesem nach vorne und oben auf der bogenförmigen Bahn A unter Führung durch die Lenker 22 mitgenommen, wobei sein Anlagepunkt immer etwa in der Mitte des vorderen oberen Umfangsquadranten des Bugradumfanges, also in einem Winkelabstand von ca. 30-60° vom Scheitelpunkt des Bugrades liegt. Noch bevor das Bugrad 4 seine strichpunktiert gezeichnete Einstellung 4′ erreicht hat, gelangt der Niederhalter 20 zur Anlage an der Anlagefläche 26 des Niederhalterträgers 24 und nimmt diesen unter Führung durch die Lenker 27 nach oben mit, wobei die Kolbenstange des Niederhaltezylinders ausgezogen wird.

Bei der Bewegung des Bugrades 4 über die Auffahrrampe 10 wandert sein Schwerpunkt über die Kippachse 11 der Auffahrrampe 10 hinweg und gelangt in deren steiler geneigten vorderen Abschnitt, wodurch die Auffahrrampe 10 nach vorne kippt und beim Anschlag des Bugrades 4′ an der Anschlagfläche 7 auch ihre obere Endlage 10′ erreicht. Während dieses Vorgangs ist die Hubschaufel 40 vom Hubkolben 44 in die strichpunktiert gezeichnete Lage 40′ vorgeschoben worden. Das freie Ende 46a des mit der Hubschaufel verbundenen Steuerarms 46 ist dabei von dem mit ihm verbundenen Lenkergetriebe auf einer zunächst abwärts gerichteten und am Ende des Aufnahmevorgangs wieder steil nach oben verlaufenden Bahn B geführt worden. In Fig. 5 ist strichpunktiert die Endlage der Hubschaufel 40′, des Steuerarms 46′ und der das Lenkergetriebe bildenden Lenker 47′, 48′, 49′ dargestellt. Ebenso ist die Endlage der im Schwenklager 43 gelagerten, die Hubschaufel 40 tragende Schwinge 42′ angedeutet.

Die Führung des Steuerarms 46 der Hubschaufel 40 durch das Lenkergetriebe bewirkt, daß die Hubschaufel bei ihrer Vorwärtsschwenkung zunächst etwas nach hinten gekippt wird, so daß ihr unterer Teil 40a das Bugrad möglichst tief untergreifen kann. Im letzten Teil der Vorwärtsbewegung wird die Hubschaufel 40 aber stark nach vorne gekippt, so daß ihr oberer, starrer Teil sich ganz oder annähernd gegen den Bugradumfang anlegt und als eine Sperre wirkt, die zusammen mit dem Niederhalter 20 ein Entweichen des Bugrades nach oben verhindert.

Wenn das Bugrad an der Anschlagfläche 7 anschlägt und die Auffahrrampe 10 ihre obere Stellung erreicht hat, wird der Endschalter S1 betätigt,dessen Schaltsignal bewirkt, daß der Hubzylinder 44 und der Niederhaltezylinder 28 (vgl. Fig. 2; in Fig. 5 nicht dargestellt) mit jeweils einem vorgegebenen Hydraulikdruck beaufschlagt werden, um die Hubschaufel 40 und den Niederhalter 20 mit jeweils einer vorgegebenen Einspannkraft gegen den Bugradumfang zu drücken. Hierdurch wird erreicht, daß das Bugrad unabhängig vom jeweils vorhandenen Reifendruck, vom Abnutzungs- oder Erneuerungszustand der Reifenoberfläche u.dgl. ausreichend fest eingespannt wird. In der so erreichten Stellung wird dann die Stangenklemmung 44a des Hubzylinders 44 freigegeben, um die Kolbenstange mechanisch zu blockieren, und im Niederhaltezylinder 28 wird das unter dem vorgegebenen Niederhaltedruck stehende Hydraulikmedium eingeschlossen. Alle diese Vorgänge laufen nach Betätigung der Hubschaufelantriebe durch den Fahrer des Schleppfahrzeugs selbsttätig ab.

Wenn bei eingespanntem Bugrad z.B. während des Transports eine Störung eintritt, z.B. ein Druckverlust im Reifen eines Bugrades, so löst dies eine entsprechende Abwärtsbewegung des unter dem Niederhaltedruck stehenden Niederhalters 20 aus, durch die gleichzeitig ein sofortiger Druckabfall in dem im Niederhaltezylinder 28 eingeschlossenen Hydraulikmedium stattfindet. Dieser Druckabfall wird durch den bereits erwähnten Druckfühler erfaßt und führt zur Auslösung eines Stör- oder Alarmsignals, so daß z.B. die Transportfahrt sofort abgebrochen werden kann. Außerdem wird durch die Nachrückbewegung des Niederhalters die Kolbenstangenklemmung 28a des Niederhaltezylinders 28 ausgelöst und die Kolbenstange nach wenigen mm Nachrückbewegung mechanisch blockiert, so daß trotz der aufgetretenen Störung ein Freikommen des Bugrades aus der Einspannung nicht stattfinden kann.

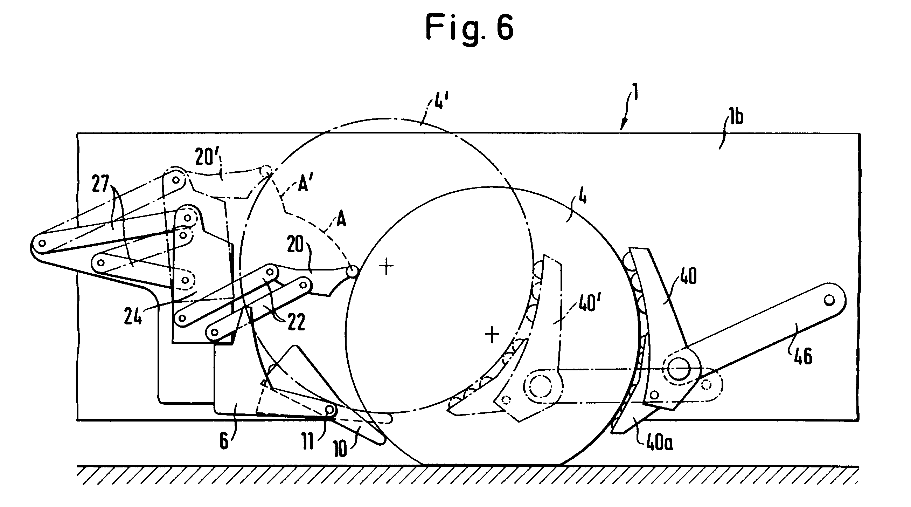

Fig. 6 zeigt in ähnlicher Darstellung wie Fig. 5 die Stellung beim Aufnehmen eines Bugrades, dessen Durchmesser an der oberen Grenze des in Frage kommenden Durchmesserbereichs liegt, insbesondere des Bugrades eines Flugzeugs vom Typ B 747 mit einem Durchmesser von 49 Zoll (124 cm). In der mit Vollinien gezeigten Stellung liegt das Bugrad 4 an der Auffahrrampe 10 an und hat diese nach unten gekippt. Der Niederhalter 20 liegt bereits in dieser Stellung am Umfang des Bugrades an. Die Hubschaufel 40 kommt bereits nach einer sehr kleinen Vorwärtsbewegung aus ihrer Ausgangslage zur Anlage am Umfang des Bugrades, wobei sie von dem Steuerarm 46 noch nicht wesentlich nach hinten gekippt worden ist. Im weiteren Verlauf der Vorwärtsbewegung der Hubschaufel 40, während der das Bugrad 4 auf die Auffahrrampe 10 geschoben wird, wird die Hubschaufel 40 vom Steuerarm 46 zunehmend nach hinten, d.h. im Uhrzeigersinn von Fig. 6 gekippt, wodurch sich ihr unterer Teil 40a zunehmend unter das Bugrad schiebt. Der Niederhalter 20 bewegt sich dabei auf seiner durch die Führungslenker 22 und dann durch die Führungslenker 27 vorgegebenen Bahn A, wodurch sein Anlagepunkt am Umfang des Bugrades 4 sich nur wenig verschiebt und auch in diesem Fall immer in einem Winkelabstand zwischen ca. 30° und 60° vom Scheitelpunkt des Bugrades liegt. Entsprechend dem größeren Bugraddurchmesser wird der Niederhalterträger 24 um eine wesentlich größere Strecke nach oben bewegt als dies bei dem kleinen Bugrad gemäß Fig. 5 der Fall ist. Ebenfalls aufgrund des größeren Bugrades hat die Hubschaufel in ihrer bei 40′ dargestellten Einspannposition erst eine Lage erreicht, die etwa auf halbem Wege zwischen den Positionen 40′ und 40″ von Fig. 5 liegt.

Zum Verständnis von Fig. 5 und 6 ist noch anzumerken, daß diese der Einfachheit halber so gezeichnet wurden, als würde das Bugrad 4 und damit das gesamte Flugzeug nach vorne bewegt. Tatsächlich steht jedoch während des Aufnahmevorgangs das Flugzeug still, und durch das Anpressen der Hubschaufel 40 gegen das Bugrad 4 wird das gesamte Schleppfahrzeug rückwärtsbewegt (in Fig. 5 und 6 nach rechts), so daß die Auffahrrampe 10 unter das Bugrad geschoben wird und das Bugrad eine im wesentlichen nur lotrecht nach oben gerichtete Bewegung ausführt. Eine Berücksichtigung der Rückwärtsbewegung des Schleppfahrzeuges hätte jedoch zu einer sehr unübersichtlichen zeichnerischen Darstellung geführt, weshalb in Fig. 5 und 6 die Stellungen nur relativ zu dem ortsfest gedachten Schleppfahrzeug dargestellt sind.

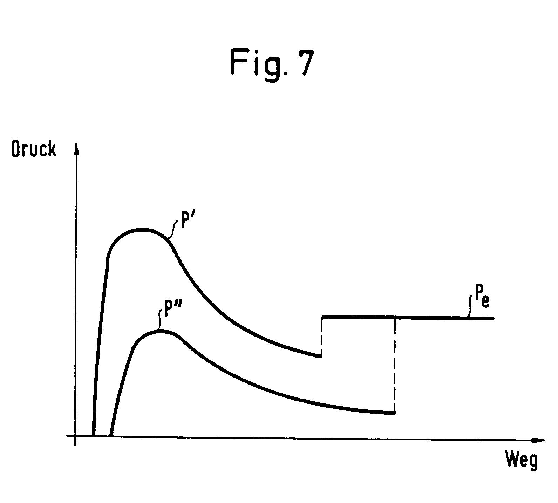

Zu Beginn eines Aufnahmevorgangs muß die Hubschaufel 40 im wesentlichen das gesamte auf dem Bugrad lastende Gewicht aufnehmen und zusätzlich eine Kraft zum Lösen des Bugrades vom Boden aufbringen. Der Hubzylinder 44 muß deshalb zu Beginn eines Aufnahmevorganges eine sehr hohe Kraft aufbringen und deshalb mit einem hohen Druck beaufschlagt sein. Im Verlauf des Aufnahmevorgangs wird ein zunehmender Teil der Bugradlast von der Auffahrrampe 10 übernommen, insbesondere wenn diese um ihre Kippachse in die obere Stellung kippt. Entsprechend nimmt die von der Hubschaufel aufzubringende Kraft, und damit auch der im Hubzylinder 44 herrrschende Hydraulikdruck ab. Fig. 7 veranschaulicht schematisch diesen Verlauf des Hydraulikdruckes P im Hubzylinder 44 in Abhängigkeit von dem von der Hubschaufel 40 zurückgelegten Weg, und zwar in der oberen Kurve P' für ein Flugzeug mit großem Bugrad und hoher Gewichtslast entsprechend Fig. 6 und in der unteren Kurve P'' für ein Flugzeug mit kleinem Bugraddurchmesser und auch kleinerer Gewichtslast. Dies sind lediglich beispielhafte Annahmen, und selbstverständlich ist die jeweils wirkende Gewichtslast vom Bugraddurchmesser unabhängig. Der Verlauf der Kurven P' und P'' hängt auch von den geometrischen Verhältnissen des die Bewegung der Hubschaufel 40 steuernden Lenkergetriebes ab. Diese sind so gewählt, daß die an der Hubschaufel 40 wirkende Kraft, und damit auch der Druck im Druckzylinder 44, auf einen Wert abgesunken sind, der auch bei der größten vorkommenden Gewichtslast eines Bugrades kleiner ist als eine gewünschte Einspannkraft bzw. ein gewünschter Einspanndruck $P_e$, der im Einspannzustand auf das Bugrad ausgeübt werden soll. Dies ist die Voraussetzung dafür, daß erfindungsgemäß am Ende des Aufnahmevorgangs Heraufsetzung des Drucks im Hydraulikzylinder 44 auf den vorgegebenen Einspanndruck $P_e$ erfolgen kann. Dieser Einspanndruck ist vom Bugraddurchmesser unabhängig und so vorgegeben, daß er groß genug ist, um ein sicheres Einspannen des Bugrades zu gewährleisten und auch Schwingungen und Eigenbewegungen des Bugrades in seiner Einspannung, die aufgrund der Reifenelastizität beim Schleppen unvermeidlich auftreten, nicht zu groß werden zu lassen. Andererseits ist der Einspanndruck $P_e$ so gewählt, daß die am Bugrad ausgeübte Einspannkraft nicht zu einer Beschädigung des Bugrades oder z.B. zu einem Flachdrücken des Bugradreifens gegen die Felge führen kann. Versuche haben ergeben, daß die dem Einspanndruck $P_e$ entsprechende Einspannkraft am Bugrad in der Größenordnung von 2 t liegen sollte.

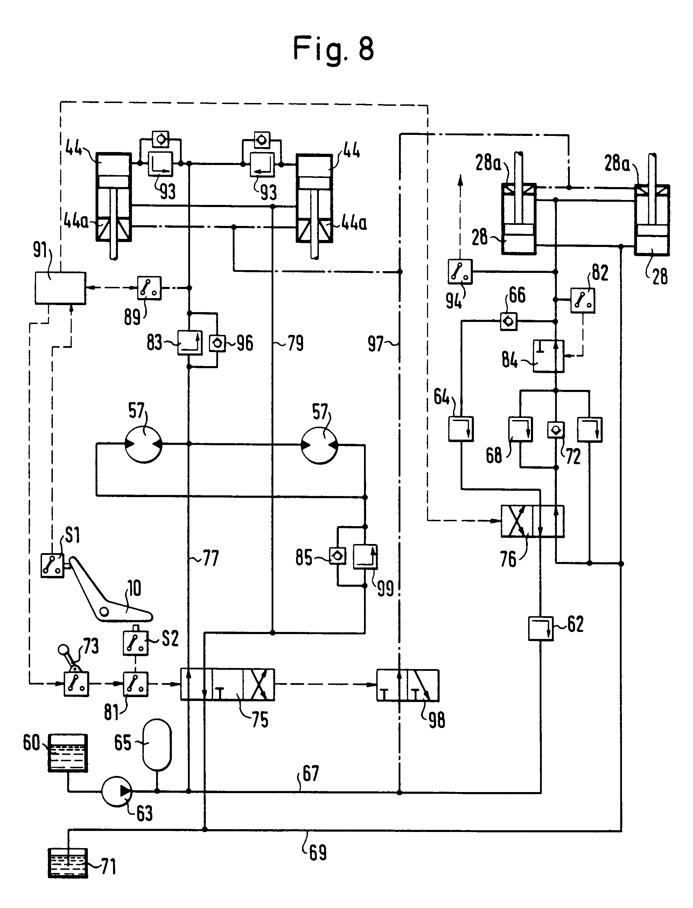

Fig. 8 zeigt einen vereinfachten elektrischen und hydraulischen Schaltplan der Hub- und Einspannvorrichtung. In Fig. 8 sind Hydraulikleitungen mit dicken Vollinien, hydraulische Steuerdruckleitungen strichpunktiert und elektrische Signalleitungen mit gestrichelten Linien dargestellt. Als hydraulisch zu betätigende Einrichtungen sind die Hubzylinder 44 und die Drehmotoren 57 für die beiden Hubschaufeln sowie die Niederhaltezylinder 28 für die Niederhalter 20 dargestellt. Der Hydraulikdruck wird von einem Versorgungssystem, umfassend einen Vorratsbehälter 60, eine Pumpe 63 und gegebenenfalls einen Druckspeicher 65, in die Druckleitung 67 geliefert. Eine Leckleitung 69 führt zu einem Auffangbehälter 71.

Ein vom Fahrer des Schleppfahrzeugs mittels eines Hebels 73 elektrisch betätigbares Ventil 75 steuert die Beaufschlagung der Drehmotoren 57 und Hubzylinder 44 mit Hydraulikmedium. Die Betätigung des Ventils 75 ist nur möglich, wenn das Schleppfahrzeug ordnungsgemäß an das Bugrad herangefahren ist, so daß das Bugrad die Auffahrrampe 10 nach unten gekippt hat und dadurch der Endschalter S2 betätigt wurde, der über ein Relais 81 das Ventil 75 zur Betätigung freigibt. Wird das Ventil 75 in die in Fig. 8 gezeigte Stellung gebracht, so gelangt Hydraulikmedium über die Leitung 77 zu den Drehmotoren 57, um die Hubschaufeln aus der Ruhestellung um 90° in die Arbeitsstellung zu schwenken (vgl. Fig. 4). Das Hydraulikmedium aus den Drehmotoren 57 kann dabei über ein Rückschlagventil 85 und die Leitung 79 in die Leckleitung 69 abfließen. Während des Schwenkens der Hubschaufeln ist der in den Drehmotoren 57 herrschende Druck kleiner als der Öffnungsdruck eines Druckschaltventils 83, welches die Zuführung von Hydraulikmedium zu den Hubzylindern 44 sperrt. Wenn die Drehmotoren 57 am Ende ihres Drehweges angekommen sind, d.h. wenn der Kurbelarm 58 in Fig. 4 am Anschlag 42a anliegt, steigt der Hydraulikdruck in der Leitung 77 an, so daß das Druckschaltventil 83 öffnet und die kolbenseitigen Arbeitsräume der Hubzylinder 44 mit Hydraulikmedium beaufschlagt werden, so daß ihre Kolbenstangen ausgefahren werden und die Hubschaufeln 40 um die Schwenklager 43 nach vorne gegen das Bugrad bewegt werden. Hierbei kann das Hydraulikmedium aus den stangenseitigen Arbeitsräumen der Hubzylinder 44 über die Leitung 79 abfließen.

Bei weiterem Ausfahren der Hubzylinder 44 bewegen die Hubschaufeln 40 das Bugrad auf die Auffahrrampe 10 und auf dieser weiter in Richtung auf den Anschlag 7. Hierbei kippt die Auffahrrampe 10 in ihre obere Stellung. Aufgrund der geometrischen Verhältnisse nimmt der in den Hubzylindern 44 herrschende Druck im Verlauf dieses Auffahrvorgangs ab. Bevor das Bugrad den Anschlag 7 erreicht, wird von der Auffahrrampe 10 der Endschalter S1 betätigt. Das Signal vom Schalter S1 gelangt in eine Schalteinheit 91, welche einen Druckschalter 89 aktiviert, der auf einen bestimmten Druck $P_e$ eingestellt ist. Wenn das Bugrad 4 am Anschlag 7 anlegt und sich nicht weiter bewegen kann, steigt der Druck im Hubzylinder 44 wieder stark an, was durch den Druckschalter 89 gemeldet wird. Bei Vorliegen beider Signale von den Schaltern S1 und 89 steuert die Schalteinheit 91 das Ventil 75 in die Sperrstellung, wodurch der Hubvorgang beendet ist. Der Hybzylinder 44 bleibt mit dem beim Ansprechen des Druckschalters 89 vorhandenen definierten Einspanndruch $P_e$ beaufschlagt was z. B. durch ein an jeden Hubzylinder 44 vorgesehenes, nur aktiv entsperrbares Rückschlagventil 93 bewirkt werden kann.

Während des Aufnahmevorgangs wird die an jedem Hubzylinder 44 vorgesehene Stangenklemmvorrichtung 44a über die hydraulische Steuerleitung 97 offengehalten. Ist der Aufnahmevorgang beendet und jeder Hubzylinder 44 mit dem Einspanndruck $P_e$ beaufschlagt, können die Stangenklemmvorrichtungen 44a durch Entlastung der Steuerleitung 97 mittels des Schaltventils 98 freigegeben werden, so daß die Kolbenstangen der Hubzylinder 44 verriegelt sind und das Bugrad auch dann eingespannt bleibt, wenn z. B. der Druck im Hydrauliksystem ausfällt.

Für das Freigeben und Absetzen eines Bugrades spielen sich die Vorgänge im wesentlichen in umgekehrter Reihenfolge ab. Der Fahrer bringt den Hebel 73 in die Stellung "Absenken", wodurch das Ventil 98 geschaltet und die Steuerleitung 97 mit Druck beaufschlagt wird, so daß die Stangenklemmungen 44a der Hubzylinder gelöst werden. Zeitverzögert hierzu wird das Ventil 75 in die Stellung gebracht, in der die Druckleitung 67 mit der Leitung 79 und die Leckleitung 69 mit der Leitung 77 verbunden ist. Das Hydraulikmedium gelangt über die Leitung 79 zu den stangenseitigen Arbeitsräumen der Hubzylinder 44, wodurch die Hubschaufeln am Fahrzeug nach hinten bewegt werden, so daß das Bugrad über die Auffahrrampe 10 abgesenkt wird. Das Hydraulikmedium aus den kolbenseitigen Arbeitsräumen fließt dabei über ein Rückschlagventil 96 und die Leitungen 77 und 69 ab. Während dieses Vorgangs ist der Druck in der Leitung 79 niedriger als der Öffnungsdruck eines Druckschaltventils 99, welches die Zuführung von Hydraulikmedium zu den Drehmotoren 57 sperrt. Während des Absenkvorgangs sind deshalb die Hubschaufeln 40 in ihrer ausgeschwenkten Arbeitsstellung aufgrund der anhand von Fig. 4 beschriebenen Geometrie der Hebelarme 58, 59 blockiert.

Wenn die Hubzylinder 44 das Ende des Rückhubes erreicht haben, steigt der Druck in der Leitung 79 so an, daß das Druckschaltventil 99 öffnet und die Zufuhr von Hydraulikmedium zu den Drehmotoren 57 freigibt. Diese drehen sich und schwenken die Hubschaufeln 40 um 90° aus der Arbeitsstellung in die Ruhestellung zurück.

Man erkennt, daß die ordnungsgemäße Reihenfolge der Betätigungen der Drehmotoren 57 und Hubzylinder 44 durch eine rein hydraulische Folgesteuerung ohne menschlichen Eingriff gewährleistet ist, wodurch das System gegen Fehlbedienungen weitgehend sicher ist.

Während des beschriebenen Aufnahmevorgangs der Bugräder sind die Niederhaltezylinder 28 weitgehend drucklos, so daß die Niederhalter 20 frei dem Bugrad folgen können. In der in Fig. 8 gezeigten Stellung eines Schaltventils 76 gelangt das Hydraulikmedium über einen ersten Druckbegrenzer 62, das Schaltventil 76, einen zweiten Druckbegrenzer 64 und ein Rückschlagventil 66 zu den stangenseitigen Arbeitsräumen der Niederhaltezylinder 28, wobei der zweite Druckbegrenzer 64 den Druck auf einen sehr niedrigen Wert von z.B. 6 hPa begrenzt, was eine leichte Vorspannkraft an den Niederhaltern 20 bewirkt, die jedoch von den Hubschaufeln 40 leicht überwunden werden kann. Das bei der Ausfahrbewegung der Niederhaltezylinder 28 aus den stangenseitigen Arbeitsräumen abfließende Hydraulikmedium kann über einen weiteren Druckbegrenzer 68, der z.B. auf 8 hPa einstellt sein kann, und das Schaltventil 76 in die Leckleitung 69 abfließen.

Am Ende des Aufnahmevorgangs, wenn die Auffahrrampe 10 den Endschalter S1 betätigt hat und außerdem der in den Hydraulikzylindern 44 eintretende Druckanstieg den Druckschalter 89 betätigt hat, wird von der Schalteinheit 91 das Schaltventil 76 umgeschaltet. Das Hydraulikmedium gelangt nun aus der Leitung 67 über den ersten Druckbegrenzer 62 und ein Rückschlagventil 72 in die Niederhaltezylinder 28, wobei der Druck nun von dem ersten Druckbegrenzer 62 begrenzt wird, der auf den Niederhaltedruck $P_e$ (z.B. 85 hPa) eingestellt ist. Entsprechend diesem Niederhaltedruck werden nun die Niederhalter mit einer definierten Niederhaltekraft beaufschlagt. Ein auf den Niederhaltedruck $P_e$ eingestellter Druckschalter 82 bewirkt das Umschalten eines Absperrventils 84, wodurch Hydraulikmedium nun unter dem Druck $P_e$ in den Niederhaltezylinder 28 eingeschlossen wird. Damit ist der Einspannvorgang abgeschlossen.

Jeder Niederhaltezylinder 28 ist mit einer Stangenklemmvorrichtung 28a von bekannter Bauart versehen, die durch hydraulische Beaufschlagung aus der Leitung 97 deaktiviert werden kann, am Ende jedes Aufnahmevorgangs aber durch Schalten des Ventils 98 aktiviert wird. Im aktivierten Zustand spricht die Stangenklemmvorrichtung 28a auf jede Ausfahrbewegung der Kolbenstange an, um diese zu blockieren. Einfahrbewegungen der Kolbenstange werden nicht blockiert. Tritt bei aktivierten Stangenklemmvorrichtungen 28a eine Lokkerung der Einspannung des Bugrades ein, z. B. durch Abnahme des Luftdrucks im Bugradreifen, so kommt es zu einer geringfügigen Nachführbewegung der Niederhalter, durch die sofort der Hydraulikdruck in den Niederhaltezylinder 28 stark absinkt. Dieser Druckabfall wird durch einen Druckschalter 94 festgestellt, der eine entsprechende Störungsmeldung oder Alarmanzeige auslöst, die dem Fahrer des Schleppfahrzeugs anzeigt, daß die Einspannung des Bugrades nicht mehr ordnungsgemäß ist und die Schleppfahrt nicht fortgesetzt werden darf.

## Patentansprüche

1. Schleppfahrzeug für Flugzeuge, welches zum Aufnehmen und Einspannen der Bugräder des Flugzeuges ein U-förmiges Fahrgestell und in der nach hinten offenen U-Ausnehmung eine Hub- und Einspannvorrichtung aufweist, mit einer das Bugrad hintergreifenden Hubschaufel, die an einem um eine horizontale Achse schwenkbaren Hubschaufelträger gelagert und durch Schwenken des Hubschaufelträgers in einem Arbeitshub nach vorne gegen das Bugrad bewegbar ist, um dieses auf eine Auffahrrampe der Hubvorrichtung und gegen einen Anschlag zu schieben, wobei die Hubschaufel an dem Hubschaufelträger um eine horizontale Achse kippbar gelagert ist, dadurch **gekennzeichnet,** daß die Kippbewegung der Hubschaufel (40) am Hubschaufelträger (42,54) während des Arbeitshubes durch einen mit der Hubschaufel (40) winkelsteif verbundenen Steuerarm (46) und ein Lenkergestänge (47,48,49) derart zwangsgesteuert ist, daß zu Beginn des Arbeitshubes der untere Teil der Hubschaufel (40) und im Endabschnitt des möglichen Arbeitshubes der obere Teil der Hubschaufel (40) stärker nach vorne bewegt wird.

2. Schleppfahrzeug nach Anspruch 1, dadurch **gekennzeichnet,** daß der obere Teil der Hubschaufel (40) starr und mit dem Steuerarm (46) winkelsteif verbunden ist, während der untere Teil (40a) der Hubschaufel (40) um eine horizontale Achse frei kippbar ausgebildet ist.

3. Schleppfahrzeug nach Anspruch 1 und 2, dadurch **gekennzeichnet,** daß die Hubschaufel (40) bzw. ihr oberer und unterer Teil jeweils als Rollenbock ausgebildet ist.

4. Schleppfahrzeug nach Anspruch 1, dadurch **gekennzeichnet,** daß die Vertikalerstreckung der Hubschaufel größer als die Hälfte des größten Bugraddurchmessers und kleiner als der kleinste Bugraddurchmesser des bei den üblichen Verkehrsflugzeugen vorkommenden Bereiches von Bugraddurchmessern ist.

## Claims

1. Towing vehicle for aircraft, which for receiving and clamping the nose wheels of the aircraft comprises a U-shaped chassis and in the U-shaped recess which is open towards the rear comprises a lifting and clamping device, with a lifting scoop engaging behind the nose wheel, which is mounted on a lifting scoop support able to tilt about a horizontal axis and by tilting the lifting scoop support in a working stroke is able to move forwards towards the nose wheel, in order to push the latter on to a ramp of the lifting device and against a stop, the lifting scoop being mounted to tilt about a horizontal axis on the lifting scoop support, characterised in that the tilting movement of the lifting scoop (40) on the lifting scoop support (42, 54) during the working stroke is controlled positively by a control arm (46) connected in an angularly rigid manner to the lifting scoop (40) and a guide rod linkage (47, 48, 49) so that at the beginning of the working stroke, the lower part of the lifting scoop (40) and in the end section of the possible working stroke, the upper part of the lifting scoop (40) is moved forwards more considerably.

2. Towing vehicle according to Claim 1, characterised in that the upper part of the lifting scoop (40) is connected in a fixed and angularly rigid manner to the control arm (46), whereas the lower part (40a) of the lifting scoop (40) is constructed to tilt freely about a horizontal axis.

3. Towing vehicle according to Claims 1 and 2, characterised in that the lifting scoop (40) or its upper and lower part is constructed respectively as a roller block.

4. Towing vehicle according to Claim 1, characterised in that the vertical extent of the lifting scoop is greater than half the greatest nose wheel diameter and smaller than the smallest nose wheel diameter of the range of nose wheel diameters occurring in conventional commercial aircraft.

## Revendications

1. Véhicule tracteur pour avions, qui présente, en vue de recevoir et de maintenir à l'état serré les roues avant de l'avion, un châssis en forme de U et un mécanisme de soulèvement et de maintien à l'état serré situé dans l'évidement en forme de U ouvert vers l'arrière, ce véhicule tracteur comportant une pelle de soulèvement, qui saisit la roue avant par l'arrière, et qui est montée sur un support de pelle de soulèvement susceptible de pivoter sur un axe horizontal et qui peut être déplacé dans une course de travail vers l'avant contre la roue avant, par pivotement du support de pelle de soulèvement, en vue de pousser la roue avant sur une rampe d'accès et de montée du dispositif de soulèvement et contre une butée, la pelle de soulèvement étant montée sur le support de pelle de soulèvement de manière à pouvoir être basculée sur un axe horizontal, véhicule tracteur caractérisé en ce que le mouvement de basculement des pelles (40) de soulèvement sur le support (42, 54) de pelles de soulèvement pendant la course de travail est commandé positivement, au moyen d'un bras (46) de commande relié selon un angle rigide à la pelle (40) de soulèvement et par un dispositif de biellettes (47, 48, 49), de façon telle qu'au début de la course de travail, la partie inférieure des pelles (40) de soulèvement est déplacée plus fortement vers l'avant, alors que dans la partie finale de la course de travail possible, c'est la partie supérieure des pelles (40) de soulèvement qui est déplacée plus fortement vers l'avant.

2. Véhicule tracteur selon la revendication 1, caractérisé en ce que la partie supérieure des pelles (40) de soulèvement est fixe et reliée avec un angle fixe au bras (46) de commande, tandis que la partie inférieure (40a) des pelles (40) de soulèvement est conformée de façon à pouvoir basculer librement sur un axe horizontal.

3. Véhicule tracteur selon la revendication 1 et 2,, caractérisé en ce que la pelle (40) de soulèvement, ou sa partie supérieure, ainsi que sa partie inférieure,se présentent sous forme d'un support à rouleaux.

4. Véhicule tracteur selon la revendication 1, caractérisé en ce que l'extension verticale des pelles de soulèvement est supérieure à la moitié du plus grand diamètre de roue avant et inférieure au plus petit diamètre de roue avant de la plage de diamètres de roues avant qui existe dans le cas des avions courants de ligne ou de transport.

Fig. 1

Fig. 2

# Fig. 3

EP 0 309 703 B1

# Fig. 4

# Fig. 5

EP 0 309 703 B1

Fig. 6

# Fig. 7

EP 0 309 703 B1

# Fig. 8

18